(19) Europäisches Patentamt
European Patent Office
Office européen des brevets

(11) **EP 4 645 117 A1**

(12) **EUROPEAN PATENT APPLICATION**

(43) Date of publication:
**05.11.2025 Bulletin 2025/45**

(21) Application number: **25173822.5**

(22) Date of filing: **30.04.2025**

(51) International Patent Classification (IPC):
***G06F 16/901*** (2019.01)

(52) Cooperative Patent Classification (CPC):
**G06F 16/9024; G06N 3/044; G06N 3/045;
G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.04.2024  PT 2024119441**

(71) Applicant: **Feedzai - Consultadoria e Inovação
Tecnológica, S.A.
3030-199 Coimbra (PT)**

(72) Inventors:
• **NASER EDDIN, AHMAD
3030-199 COIMBRA (PT)**
• **BONO, JACOPO
3030-199 COIMBRA (PT)**
• **COLAÇO FERREIRA, HUGO RICARDO
3030-199 COIMBRA (PT)**
• **SANTOS RODRIGUES BIZARRO, PEDRO
GUSTAVO
3030-199 COIMBRA (PT)**

(74) Representative: **Patentree
Edificio Net
Rua de Salazares, 842
4149-002 Porto (PT)**

(54) **METHOD AND DEVICE FOR LOW-LATENCY DYNAMIC EMBEDDING GENERATION FOR
TRANSACTIONAL GRAPHS**

(57)    Computer-implemented method and computer device for low-latency dynamic embedding generation for transactional graphs related to providing a task specific score regarding a time-dependent graph, preferably a Continuous Time Dynamic Graph (CTGD), for classifying data records from a real-time transactional data record stream. In particular, a memory-constrained computer-implemented method and computer device for low-latency dynamic embedding generation for a transactional graph from a real-time transaction stream comprising transaction data records, wherein each transaction corresponds to an edge, for obtaining a feature embedding for at least a portion of the plurality of nodes, by using a computer system for recurrently updating a state array corresponding to a feature embedding of each node of the at least a portion of the plurality of nodes.

**Fig. 1**

## Description

### TECHNICAL FIELD

The present disclosure relates to a computer-implemented method, and device, for low-latency dynamic embedding generation for transactional graphs related to providing a task specific score regarding a time-dependent graph, preferably a Continuous Time Dynamic Graph (CTGD), for classifying data records from a real-time transactional data record stream.

### BACKGROUND

Graphs serve as a foundational structure for modelling and analysing interconnected systems, with applications spanning in computer science, mathematics, and life sciences. Recent advancements have emphasized the critical role of dynamic graphs, which capture evolving relationships in systems like social networks and financial markets [7, 51, 52, 26, 11].

Dynamic graphs are categorized into Discrete Time Dynamic Graphs (DTDGs) and Continuous Time Dynamic Graphs (CTDGs) [32]. DTDGs are viewed as a sequence of snapshots at set intervals, while CTDGs are seen as a continuous stream of events, such as adding a new edge, which updates the graph's structure with each occurrence.

In Machine Learning (ML), the representation of graph structures poses a significant challenge, especially for dynamic graphs. Traditional graph feature engineering methods rely on manually crafted heuristics to capture graph characteristics, requiring domain knowledge, which is time-consuming for humans to engineer new features [4]. Conversely, graph representation learning, particularly through Graph Neural Networks (GNNs), seeks to automate this process, learning compact, low-dimensional embeddings of graph structures [16]. Despite growing interest, the focus has largely remained on static graphs, overlooking the dynamic nature of many real-world systems [29, 14, 15].

Existing methods for handling CTDGs (e.g., [8, 23, 47, 32]) often face computational and memory constraints, limiting their practicality for real-time applications. Approaches like asynchronous operation and truncated backpropagation have been employed to mitigate these issues, but they introduce compromises in representation accuracy and the learning of long-term dependencies [32, 41].

Deep learning depends significantly on credit assignment, a process identifying the impact of past actions on learning signals [27, 36]. This process is essential for reinforcing successful behaviours and reducing unsuccessful ones.

The capability of assigning credit in deep learning models depends on the differentiability of learning signals enabling the use of Jacobians for this purpose [6]. A key technique in this context is Automatic Differentiation (AD), a computational mechanism for the derivation of Jacobians through a predefined set of elementary operations and the application of the chain rule, applicable even in programs with complex control flows [3]. AD is particularly valuable for matrix and vector operations, essential for advanced numerical analysis in deep learning models.

In AD, depending on the direction of applying the chain rule, three strategies stand out: forward mode, reverse mode (often termed backpropagation), and mixed mode. Forward mode involves multiplying the Jacobians matrices from input to output. Reverse mode, a two-phase process, first executes the function to populate intermediate variables and map dependencies, then calculates Jacobians in reverse order from outputs to inputs [3]. Mixed mode combines these approaches.

Temporal models, such as Recurrent Neural Networks (RNNs) and GNNs for temporal graphs, pose specific challenges for AD due to their memory-intensive nature in backpropagation. The memory complexity for storing intermediate states across timestamps significantly impacts computational efficiency. For instance, in an RNN with sequence length $l$ and state size $d$, reverse-mode AD exhibits computational and memory complexities of $O(l \times d^2)$, posing scalability issues for long sequences [3].

To mitigate these challenges, Truncated Backpropagation Through Time (TBPTT) optimizes resource usage by limiting the backpropagation horizon, thus reducing both computational and memory demands. However, TBPTT's constraint on the temporal horizon restricts its ability to capture long-term dependencies, impacting model performance over extended sequences [43].

Forward-mode AD, exemplified in real-time recurrent learning (RTRL), offers an alternative by facilitating online updates to parameters, which is particularly advantageous for models requiring the retention of information over extended durations. Despite its benefits for capturing long-term dependencies with reduced memory overhead, $O(d^2)$, RTRL's computational demand, $O(l \times d^4)$, limits its practicality in large-scale networks [44, 6].

In summary, while reverse mode AD is challenged by memory intensity, TBPTT presents a compromise by reducing memory and computational needs at the expense of long-term dependency capture. Forward mode AD addresses both long-term retention and memory efficiency but is hindered by its computational intensity.

Graph representation learning is crucial in transforming complex graph structures into usable formats for ML models.

Regarding Random-walk based techniques, a random-walk, in the context of graph theory, is a stochastic process that derives random paths originating from a designated node. By conducting numerous such walks, one can approximate the inherent structure of the network. Notably, if two nodes exhibit similar random-walks, it might suggest they occupy analogous structural roles in the network.

Traditional random-walk methods like, DeepWalk [29], LINE [37], Node2vec [14], Struc2vec [30], Metapath2vec [9], Role2vec [1], are genuinely stochastic, choosing a random neighbour to progress the walk at each hop. Node2vec [14], however, introduces a degree of bias, using two parameters, to direct the walks to be either shallower or deeper.

Sajjad et al. [33] adapted random-walk techniques to DTDG. While this adaptation introduced a degree of efficiency, it remains constrained in its applicability, especially for CTDGs and in low-latency situations. In contrast, Node2bits [17] integrates time-related details by separating the random walks it samples into different time windows. It combines node attributes into histograms during these times. Node2bits creates binary representations to reduce memory footprint. These methods demand considerable computational resources for executing walks, making them less suitable for scenarios requiring low latency.

Further developments, such as continuous-time dynamic node embeddings (CTDNE) [24, 28], were introduced to provide time-aware embeddings, augmenting the Node2vec [14] paradigm for CTDGs. These methodologies treat the graph as a stream of edges and perform temporal walks from seed nodes chosen through a temporally-biased distribution. Hyperbolic spaces have seen the application of temporal random-walks for embedding extraction [40].

Moreover, the anonymous walks approach [42] employs causal anonymized walks to encode motif-centric data (motifs refer to subgraphs that occur within a real network at a frequency higher than what statistical probability would typically predict [31]). In parallel, NeurTWs [21] integrates time into the anonymous walks via Neural Ordinary Differential Equations (NeuralODEs). It is essential to note that these methods necessitate exhaustive random-walk executions.

A major limitation of random-walk-based approaches is their time complexity. To address efficiency, methods like B_LIN [38] have been developed. This method improves efficiency by leveraging two prevalent characteristics found in many real-world graphs, namely, linear correlations and community-like structures.

Apart from time complexity, random-walks also impose significant demands on main memory volume. This issue is particularly relevant as many high-speed random-walk algorithms assume the entire graph fits within the main memory, a challenge highlighted by [46]. To address this, various strategies have been developed for graph partitioning and clustering. Notable among these are METIS [22], and RWDISK [35], which offer practical solutions for managing large-scale graphs efficiently.

Random-walks have applications in collaborative filtering, recommender systems, computer vision, and more. For a comprehensive review of random-walk-based applications and the challenges they pose, the reader is directed to [46].

Recently, there has been a surge in deep learning algorithms for graph representation learning, normally based on k-hop neighbourhood. Several approaches leverage GNNs to learn functions that generate node embeddings [15, 50, 48, 53].

Most GNN-based methods require a k-hop neighborhood on which message-passing operations lead to node embeddings. To deal with CTDGs, a simple approach is to consider a series of discrete snapshots of the graph over time, on which static methods are applied. Such approaches however do not take time properly into account and several works propose techniques to alleviate this issue [34, 13, 19]. To better deal with CTDGs, other works focus on including time-aware features or inductive biases into the architecture. DeepCoevolve [8] and Jodie [23] train two RNNs for bipartite graphs, one for each node type. Importantly, the previous hidden state of one RNN is also added as an input to the other RNN. In this way, the two RNNs interact, in essence performing single-hop graph aggregations. TGAT [47] proposes to include temporal information in the form of time encodings, while TGN [32] extends this framework and also includes a memory module taking the form of an RNN. In [18], the authors replace the discrete-time recurrent network of TGN with a NeuralODE modelling the continuous dynamics of node embeddings.

GNNs are instrumental in analyzing vast time series data, but adapting them to large datasets is challenging due to memory constraints. While various sampling strategies exist, merging them with temporal data remains complex. Enhancing GNN's scalability for real-time applications is a critical research area [20]. A comprehensive review on GNN-based approaches for time series analysis is found in reference [20].

Another set of graph methods are the low-latency methods. APAN [41] proposes to reduce the latency at inference time by decoupling the more costly graph operations from the inference module. The authors propose a more light-weight inference module that computes the predictions based on a node's embedding as well as the messages recently received from interacting nodes, stored in the node's "mailbox". The mailbox is updated asynchronously, i.e. separated from the inference module, and involves the more expensive k-hop message passing. While APAN improves the latency at inference time, it sacrifices some memory since each node's state is now expanded with a mailbox, and more importantly it potentially uses outdated information at inference time due to asynchronous update of this mailbox. This algorithm addresses the need to generate low-latency embeddings, similar to our Graph-Sprints and Deep-Graph-Sprints methods. However, APAN uses outdated information which could negatively affect its overall performance.

Moreover, towards reducing computational costs of GNNs, HashGNN [45] leverages MinHash (an algorithm used to efficiently estimate the similarity between sets, by hashing their elements into a smaller representative set of hash values) to generate node embeddings suitable for the link prediction task, where nodes that results in the same hashed embedding are considered similar. SGSketch [49] is a streaming node embedding framework uses a mechanism to gradually forget outdated edges, achieving significant speedups. SGSketch uses the gradual forgetting strategy to update the adjacency matrix and therefore only considers the graph structure.

Liu et al. [25] propose an algorithm for graph streams that performs node representation updates in real-time by: 1) Identifying nodes influenced by newly added nodes (e.g., one-hop neighbours); 2) Generating embeddings for new nodes through linear summation of influenced nodes' embeddings; 3) Adjusting the embeddings of these influenced nodes. Therefore, generating approximated embeddings in low latency. However, the embeddings depend only on the neighbours embeddings and ignoring the target vertex attributes.

Jiqun et. al., [5] propose Exponential Smoothing Multi-Layer Perceptron (ETSMLP) model, which leverages an exponential smoothing technique to model long-term dependencies in sequence learning. The model employs two learnable damped factors, to modify the influence of a smoothing factor and the current input, respectively. These factors enable the model to adjust the impact of past and current data adaptively. It treats the learnable and smoothing factors as complex numbers for a richer representation.

These facts are disclosed in order to illustrate the technical problem addressed by the present disclosure.

## GENERAL DESCRIPTION

The present disclosure relates to a computer-implemented method, and device, for low-latency dynamic embedding generation for transactional graphs related to providing a task specific score regarding a time-dependent graph, preferably a Continuous Time Dynamic Graph (CTGD), for classifying data records from a real-time transactional data record stream.

The present disclosure comprises a novel architecture for the representation learning of CTDGs, aiming to overcome the identified limitations. The disclosed approach leverages forward-mode automatic differentiation, specifically RTRL [44], within a tailored recurrent cell structure, enabling efficient computation and memory usage without sacrificing the ability to capture long-term dependencies.

The contributions of the disclosure are at least threefold:

Limitations in current methodologies for graph representation learning are identified, highlighting their computational inefficiencies and limitations in capturing dynamic behaviours;

A method and system, hereby described as Deep-Graph-Sprints (DGS), is disclosed, which is a method and device designed for real-time representation learning of CTDGs, minimizing latency and maximizing the capture of long-term dependencies;

Through extensive experiments on diverse datasets, the effectiveness and versatility of DGS in node classification and link prediction tasks is demonstrated, showcasing significant improvements over existing methods.

In the present disclosure, vectors are implemented as computer arrays (one dimensional) and matrixes are implemented as 2-dimensional computer arrays.

The disclosure includes a memory-constrained computer-implemented method for low-latency dynamic embedding generation for a transactional graph from a real-time transaction stream comprising transaction data records, wherein each transaction corresponds to an edge and is carried between a first node and a second node among a plurality of nodes, for obtaining a feature embedding for at least a portion of the plurality of nodes, by using a computer system for recurrently updating a state array corresponding to a feature embedding of each node of the at least a portion of the plurality of nodes, the method comprising the steps of:

receiving a transaction data record from the transaction stream;

encoding the received transaction data record to a feature array;

first-stage propagating, the encoded feature array, a first node array state of the node feature embedding for the first node, and a second node array state of the node feature embedding for the second node, through an embedding 2-dimensional array for mapping the encoded feature mapping, a first discount array for weighing node proximity, and a second discount array for weighing temporal retention, to obtain an updated first node array state; and

second-stage propagating the updated first node array state by a machine-learning classifier to obtain a classification score;

wherein the method further comprises:

obtaining, by forward-mode Automatic Differentiation, AD, a first-stage gradient array of the updated first node array state in respect of the embedding 2-dimensional array, the first discount array, and the second discount array;

obtaining, by backpropagation from a second-stage loss function on the classification score, a second-stage gradient array of the loss function with respect of the updated first node array state;

obtaining a classification-loss gradient array of the classification loss in respect of the embedding 2-dimensional array, the first discount array, and the second discount array by multiplying the first-stage gradient array and the second-stage gradient array;

updating the embedding 2-dimensional array, the first discount array, and the second discount array by taking a gradient descent step using the obtained classification-loss gradient array; and

repeating the preceding steps, as further transaction data records are received.

Thus, the disclosure includes using the updated embedding 2-dimensional array, the first discount array, and the second discount array to generate, for the transactional graph, an updated state array of each node of the at least a portion of the plurality of nodes, as feature embeddings.

In an embodiment, the computer system comprises a data processor coupled to a volatile memory wherein said volatile memory is insufficient to store the entire transactional graph, in particular wherein said volatile memory is a physical volatile memory [i.e. not virtualised memory].

In an embodiment, the transactional graph is a continuous-time dynamic graph, CTDG, and the method comprises repeatedly carrying the disclosed steps as each transaction data record is received [i.e. online processing].

In an embodiment, the method comprises repeatedly carrying the disclosed steps in batches, wherein each batch comprises a plurality of transaction data records [i.e. batch processing].

In an embodiment, the first-stage propagating comprises the steps of:

obtaining a current embedding array by applying the embedding 2-dimensional array to the encoded feature array and applying a softmax probability distribution;

obtaining a first weighted array between the obtained current embedding array obtained in the previous step and the second node array state using the first discount array;

obtaining a second weighted array between the obtained first weighted array and the first node array state using the second discount array;

using the obtained second weighted array, as the updated first node array state.

An embodiment comprises the steps of:

first-stage propagating the encoded feature array, a second node array state of the node feature embedding for the second node, and a first node array state of the node feature embedding for the first node, through an embedding 2-dimensional array for mapping the encoded feature mapping, a first discount array for weighing node proximity, and a second discount array for weighing temporal retention, to obtain an updated second node array state; and

second-stage propagating the updated second node array state by a machine-learning classifier to obtain a classification score;

wherein the method further comprises:

obtaining, by forward-mode Automatic Differentiation, AD, a first-stage gradient array of the updated second node array state in respect of the embedding 2-dimensional array, the first discount array, and the second discount array;

obtaining, by backpropagation from a second-stage loss function on the classification score, a second-stage gradient array of the loss function with respect of the updated second node array state;

obtaining a classification-loss gradient array of the classification loss in respect of the embedding 2-dimensional array, the first discount array, and the second discount array by multiplying the first-stage gradient array and the second-stage gradient array;

updating the embedding 2-dimensional array, the first discount array, and the second discount array taking a gradient descent step using the obtained classification-loss gradient array; and

repeating the preceding steps, as further transaction data records are received.

Thus, the disclosure includes using the updated state array of each node of the at least a portion of the plurality of nodes, as feature embeddings.

In an embodiment, the second-stage propagating is by an artificial neural-network.

An embodiment comprises the step of outputting the updated embedding 2-dimensional array, the first discount array, and the second discount array to generate subsequent embeddings for the transactional graph.

In an embodiment, the low-latency dynamically generated embeddings comprise sub-embeddings concatenable to form a unified embedding.

In an embodiment, the first discount array is obtained by applying a first trainable 2-dimension array to the feature array, and the second discount array is obtained by applying a second trainable 2-dimension array to the feature array.

It is also disclosed a memory-constrained computer-implemented method for low-latency inference for a transactional graph from a real-time transaction stream comprising transaction data records, wherein each transaction corresponds to an edge and is carried between a first node and a second node among a plurality of nodes, by using a computer system for applying the low-latency dynamically generated embedding 2-dimensional array, first discount array, and second discount array of any of the disclosed embodiments, the method comprising the steps of:

> receiving a transaction data record from the transaction stream;
> encoding the received transaction data record to a feature array;
> first-stage propagating the encoded feature array, a first node array state of the node feature embedding for the first node, and a second node array state of the node feature embedding for the second node, through the embedding 2-dimensional array for mapping the encoded feature mapping, the first discount array for weighing node proximity, and the second discount array for weighing temporal retention, to obtain an updated first node array state; and
> second-stage propagating the updated first node array state by the machine-learning classifier to obtain a classification score.

Particularly, the preceding method includes repeating the preceding steps, as further transaction data records are received.

It is also disclosed a computer device comprising a data processor arranged to carry out any of the disclosed methods.

It is also disclosed a computer device comprising a computer-readable storage medium comprising the low-latency dynamically generated embeddings of the disclosed methods.

It is also disclosed a computer device wherein the first-stage propagating is carried out using a GPU or NPU, the second-stage propagating and backpropagating is carried out using a GPU or NPU, and the obtaining of the first-stage gradient array, of the second-stage gradient array, and of the classification-loss gradient array is carried out using a GPU or NPU, in particular wherein data loading in batches comprising transaction data records from the transaction stream is carried out using a CPU.

It is also disclosed a computer program product embodied in a non-transitory computer-readable medium comprising computer program instructions, which when executed by a computer processor, cause the computer processor to carry out any of the disclosed methods.

## BRIEF DESCRIPTION OF THE DRAWINGS

The following figures provide preferred embodiments for illustrating the disclosure and should not be seen as limiting the scope of invention.

**Figure 1:** Schematic representation of an embodiment of the DGS architecture.

**Figure 2:** Schematic representation of the state calculation based on equation (2), detailing the application of the equation in computing node state at time t.

**Figure 3:** Schematic representation of the recurrent training process.

**Figure 4:** Representation of the inference process algorithm.

**Figure 5:** Plots comparing the Area Under the ROC Curve, AUC and the runtime obtained with the five models for the three public databases (Wikipedia, Mooc and Reddit).

## DETAILED DESCRIPTION

The present disclosure relates to a computer-implemented method, and device, for low-latency dynamic embedding generation for transactional graphs related to providing a task specific score regarding a time-dependent graph, preferably a Continuous Time Dynamic Graph (CTGD), for classifying data records from a real-time transactional data record stream.

A low latency node representation learning method, namely DGS, is disclosed. First, the main components that form its architecture are explained, which are then further detailed. Furthermore, the training that distinguishes the disclosed method is described, highlighting its enhanced memory efficiency and ability to capture long-term dependencies compared to existing approaches. Additionally, the disclosed method is described during inference, demonstrating how it achieves low latencies.

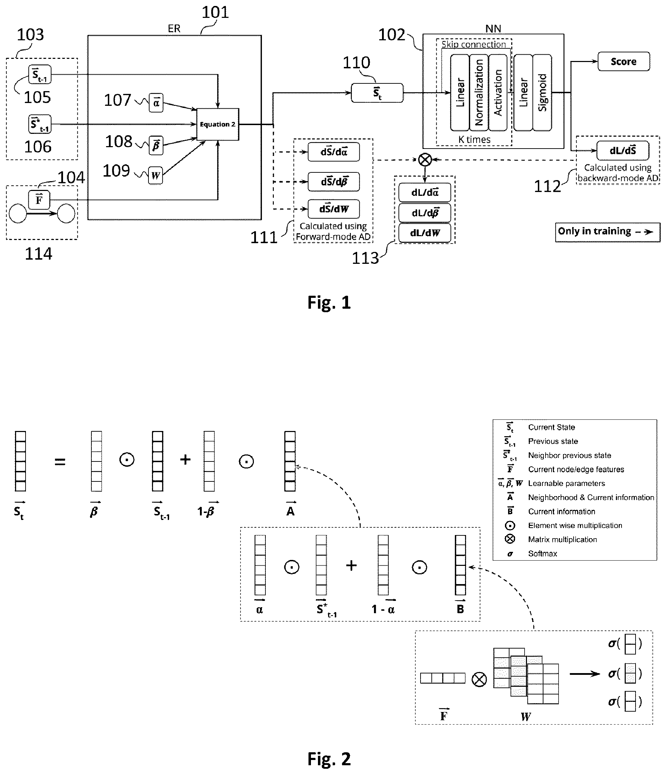

The following pertains to the DGS Architecture. **Figure 1** shows a schematic representation of an embodiment of the DGS architecture, where: **101** represents the Embedding Recurrent Component (ER), **102** represents the Neural Network (NN), **103** represents the states of nodes at time instant *t-1*, **104** represents the edge features incremented to the graph at time *t*, **105** represents a state of a node at time *t-1*, **106** represents a state of the nearest node at time *t-1*, **107** represents a vectorized forgetting coefficient of the analysed node, **108** represents a vectorized proximity coefficient of the nearest node, **109** represents an embedding matrix, 110 represents a state of a node at time *t*, and **111** represents the set of forward move automatic differentiation derivatives.

In an embodiment, the DGS method is developed to handle a stream of edges. As shown in **Figure 1,** the system processes each incoming edge to derive a task-specific score, applicable for any ML task such as classification.

The diagram of **Figure 1** illustrates the workflow from receiving edge data, through the generation of embeddings for nodes or edges, to the application of a NN to generate a task specific score. Furthermore, the diagram elucidates the computation of gradients through the application of mixed-mode AD. Equation (2), and **Figure 2** provide more details about the Embedding Recurrent Component (ER) component.

Similar to established approaches in this domain (e.g., [32, 23]), the DGS method is divided into two key components:

Embedding Recurrent Component (ER), **101,** which is dedicated to representation learning, where each node or edge in the graph is mapped from high-dimensional, complex graph structures to a lower-dimensional embedding space. Neural Network (NN), **102,** which is responsible for decision-making processes, such as classification. It uses the embedding provided by the ER component, **101,** to generate a task specific score.

In an embodiment, the ER component, **101,** is particularly noteworthy for its role in updating the embeddings of nodes or edges, thereby enriching them with detailed attributes and relationships context within the network.

These embeddings are then input into the NN, **102,** which is tailored to specific applications. For instance, in node classification, the network evaluates each node associated with a new edge, with the score reflecting the network's interpretation from the representations provided by the ER component.

In an embodiment, the ER component, **101,** is the core mechanism within the disclosure that processes dynamic graph data. This component plays a crucial role in generating embeddings for nodes based on the incoming stream of edges.

Building upon Graph-Sprints [10], a low-latency graph feature engineering approach, which formalized in equation 1 [10]. A node's embedding is determined by integrating the historical state of the target node, the historical state of its immediate neighbour, and the attributes of the current edge.

$$\vec{S_t} = \beta \overrightarrow{S_{t-1}} + (1 - \beta)\left((1 - \alpha)\,\vec{\delta}(F_t) + \alpha \overrightarrow{S^*_{t-1}}\right) \qquad (1)$$

Here, $\vec{S_t}$ denotes the state of a node at time t, evolving from its previous state $\overrightarrow{S_{t-1}}$ and the state of the adjacent node $\overrightarrow{S^*_{t-1}}$, while also incorporating the current edge's features $F_t$ encoded through the $\vec{\delta}$ function. The coefficients $\alpha$ and $\beta$ are scalar forgetting factors that modulate the impact of past information on the current state.

Although *Graph-Sprints* demonstrates rapid processing capabilities and aligns well with leading techniques, it could be applied in other practical applications. These include applications requiring complex and time-consuming tuning processes required for its feature extraction and decision-making components. The model's expressivity has been found to be constrained by the uniform application of scalar forgetting coefficients across all features, and its ability to capture the unique temporal dynamics of each feature could be improved. Additionally, challenges arise from the necessity to define histogram bin edges accurately, a task that becomes cumbersome with large datasets. Moreover, the use of a big number of histogram bins significantly increases the memory and space requirements especially in datasets with many features. These aspects highlight that further developments could be made to enhance the applicability and efficiency of the prior art in diverse scenarios.

In contrast, the proposed method, goes beyond traditional feature engineering by employing a dynamic learning mechanism for embeddings. This shift from predefined feature engineering to adaptive learning allows the embodied model to better evolve in response to the data, enhancing its predictive accuracy and relevance.

In an embodiment, the state update equation is illustrated in equation 2.

$$\vec{S_t} = \vec{\beta} \odot \overrightarrow{S_{t-1}} + (1 - \vec{\beta}) \odot \left((1 - \vec{\alpha}) \odot (\oplus_{i=1}^{x} \vec{\sigma}(W_i F_t)) + \vec{\alpha} \odot \overrightarrow{S_{t-1}^*}\right) \qquad (2)$$

In this equation, there are vectorized forgetting coefficients, $\vec{\alpha}$, **107,** and $\vec{\beta}$, **108,** each corresponding in dimensionality to the embedding vector, and modulate the weighting between current and historical information, and between self and neighbourhood information, respectively.

Each dimension of $\vec{\alpha}$, **107,** and $\vec{\beta}$, **108,** corresponds to unique forgetting rates for each embedded feature in the state vector, which itself consists of a vector, which will be detailed below, enabling a more sophisticated and feature-specific temporal integration. Specifically, for each embedded feature $i$, individual forgetting coefficients $\alpha_i$ and $\beta_i$ are learned.

Moreover, the embedding matrix $W$, **109,** is an important component of the disclosed approach, and is tasked with mapping input features into a vector of the same size as the embedding vector. Inspired by the Graph-Sprints histogram-based feature representations, the softmax function, $\vec{\sigma}$, is used to achieve analogous representations. Other activation functions could be considered.

DGS enhances model expressiveness and optimizes memory usage by incorporating multiple softmax functions, each applied to a segment of the product between the embedding matrix $W$, **109,** and the feature vector $F$, **104.** This strategy not only aids in diminishing computational and memory demands by lowering the Jacobian's dimensionality, but also introduces a modular structure akin to multihead attention mechanisms in transformers [39].

**Figure 2** illustrates an example of applying Equation 2 to calculate the state of a certain node at time $t$.

In an embodiment, the NN component, **102,** is a feedforward neural network, which encompasses multiple layers. The configuration of this component is subject to optimization depending on the task at hand. This optimization includes decisions like the number of layers, the size of each layer, and the incorporation of normalization layers.

The following pertains to the Training Process. In an embodiment, the design of DGS methodically incorporates forward-mode AD for learning the ER component, **101.** In contrast, the subsequent NN component, **102,** processing the embeddings, **110,** generated by the ER component, utilizes reverse-mode AD differentiation, **112.** This hybrid approach effectively leverages the strengths of both paradigms, namely, learning long term dependencies, and ensuring efficient learning, while accommodating the memory constraints and structural complexities of graph data.

In typical ML scenarios, the complexity of forward-mode AD limits its applicability. Nonetheless, forward-mode AD, **111,** is applicable in situations requiring a manageable number of Jacobian computations, offering efficient Jacobian propagation through computational graphs, and learning long term dependencies.

In an embodiment, the feasibility of forward-mode AD, **111,** is supported by two main considerations. First, DGS is dominated by elementwise multiplications, where different elements of a state vector are not mixed together, Second, the implementation of multiple softmax functions limits each state element's dependency to segments of the embedding matrix $W$, **109.**

The element-wise multiplication between the state vectors $\vec{S}$ and the parameters vectors $\vec{\alpha}$, **107,** and $\vec{\beta}$, **108,** optimizes the calculation of Jacobians $\dfrac{\partial \vec{S}}{\partial \vec{\alpha}}$ and $\dfrac{\partial \vec{S}}{\partial \vec{\beta}}$, **111,** with a computational and memory complexity of $O(s)$. Conversely, if the operation were matrix multiplication, the complexity would rise to $O(s^2)$. A similar advantage is observed in the element-wise multiplication between the encoded feature vector and the parameter vectors.

In an embodiment, the embedding matrix $W$, with dimensions $s \times f$ (embedding size by the number of features), the application of a single softmax function over the whole embedded vector would result in Jacobians of dimensions $f \times s^2$, resulting in a computational and memory complexity of $O(f \times s^2)$. However, DGS mitigates this through the deployment of multiple softmax functions, each managing a segment of the state. With $x$ softmax functions, each addressing a subset of $h = \dfrac{s}{x}$ rows, the computational and memory requirement is effectively reduced to $O(f \times h \times s)$, demonstrating the method's adeptness in optimizing both computational and memory resources.

In an embodiment, the total computational complexity is linear with respect to the state size $s$, assuming a fixed $h$. This is desirable and similar to backpropagation. Furthermore, it is feasible to fix $h$ to a predetermined value.

These factors collectively justify the selection of forward-mode AD, **111,** for the differentiation process in the ER component of our architecture. The Jacobians updates can be implemented manually using PyTorch [12].

In the NN component, **102,** the number of learnable parameters varies based on model architecture, and primarily involves the network's weights. The parameters of the NN component are optimized using backpropagation, **112,** and this can be implemented with the functionalities of a standard deep learning platform, namely PyTorch [12].

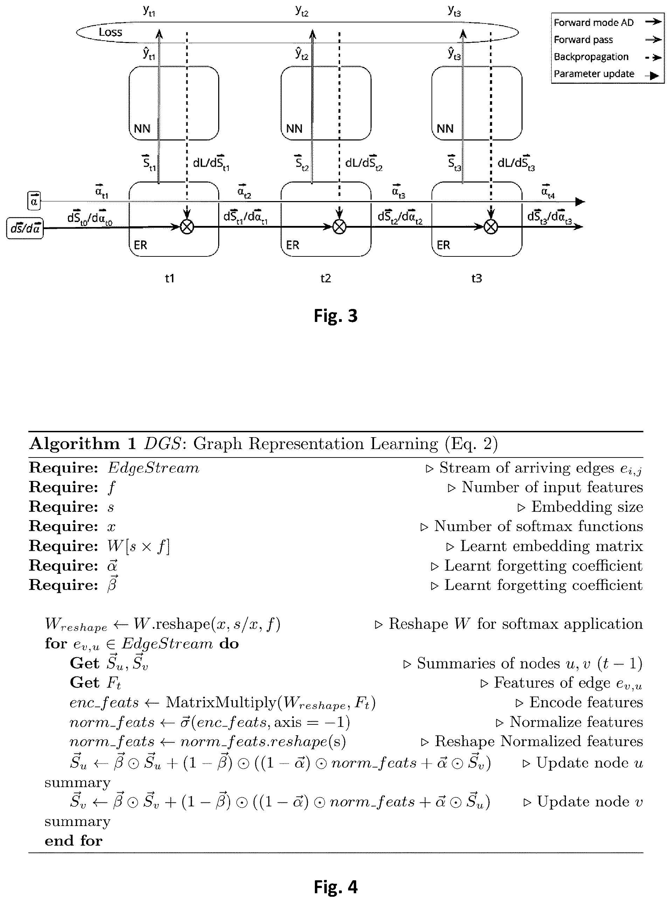

**Figure 3** schematically represents the recurrent training process.

**Figure 3** illustrates the steps involved over three successive timesteps, highlighting the calculation of derivatives in a mixed-mode approach, for one learnable parameter $\vec{\alpha}$, **107.** It combines forward mode differentiation, **111,** for the ER component, **101,** with backpropagation, **112,** for the NN classifier, **102.** Updating the remaining parameters (i.e., $\vec{\beta}$, W)

follow the same strategy. This hybrid methodology enables an efficient solution that effectively captures long-term dependencies.

In an embodiment, to expedite the training process, minibatch training is employed, wherein the input comprises a batch of edges. In cases where a singular node appears multiple times within a single batch, each occurrence is associated with the same antecedent node state, which represents the most recent state prior to the batch's execution. This methodology implies that nodes contained within the same batch do not utilize the most current information due to the prohibition of intra-batch informational exchange.

In an embodiment, a batch strategy, similar to the one implemented by the Jodie [23] paper, can be adopted, where batch size is dynamic and nodes only appear once in the same batch.

The following pertains to the Inference Process. **Figure 4** represents the inference process algorithm.

In an embodiment, the inference phase is characterized by the absence of gradient computation, which simplifies and streamlines the overall procedure. In the streaming context, as elaborated when detailing the DGS Architecture, the occurrence of an edge triggers an update in the states of the nodes interconnected by this edge, employing the algorithm presented in **Figure 4** for the update mechanism. Subsequently, these updated states are harnessed as input for the NN component. The nature of the input to the NN component is task dependent: it may constitute a singular node state for node classification tasks, or the concatenation of two node states for tasks such as link prediction.

The detailed mechanics of the state calculation procedure is systematically delineated in algorithm **of Figure 4,** offering a guide for its application during the inference process.

In an embodiment, to accelerate inference in scenarios suitable for batch processing, a mini-batch inference strategy is employed. This approach updates the states of nodes or edges within each batch simultaneously, leveraging collective computational resources. When a node appears multiple times within the same batch, as in the training phase, each instance is linked to the same prior node state, which is the most recent state before the batch's execution. Consequently, there is no exchange of states within the batch. Note that this is optional and similarly to mini-batch procedure in training, a different strategy can be leveraged.

Following the parallel updates, the aggregated states are inputted into the NN component, 102. This step generates a batched output tailored to the task, whether it involves node classification, link prediction, or any other relevant activity.

This mini-batch inference strategy not only enhances computational efficiency but also offers a scalable approach for processing extensive graph data in real-time inference contexts. This ensures that the system remains efficient and responsive, even when handling large data sets.

The following pertains to the Experimental Setup. The efficacy of the disclosed method was evaluated through the node classification task across five different datasets. This included using three open-source external datasets and two proprietary datasets.

The performance of the disclosed method is compared against several baselines. The first simple baseline, henceforth named as "Raw", trains a ML model using only raw edge features. Another baseline is the "Graph-Sprints" [10], a graph feature engineering method, and is referred as "GS". The "GS" baseline uses the same ML classifier used by the "Raw" baseline, but diverges in the feature used for training- "GS" employs Graph-Sprints histograms, while "Raw" employs the raw edge features. An additional baseline set comprises state-of-the-art GNN methods, specifically TGN [32]. The present TGN implementation, based on PyTorch Geometric [12], differs from the original by restricting within-batch neighbour sampling. A difference between the disclosed implementation, for comparison, and the default PyTorch Geometric approach, is that the prior art approach does not update the state with current edge features before classification, a common practice in link prediction tasks. To ensure a fair comparison, edge features are incorporated into the node state before classification. For consistency, GS and DGS also employ the same constraints. Several TGN variants were used: TGN-attn, aligning with the original paper's robust variant [32], TGN-ID, a simplified version focusing solely on memory module embeddings, and Jodie, which utilizes a time projection embedding with gated recurrent units. TGN-ID and Jodie baselines, which do not necessitate neighbour sampling, were chosen for their lower-latency attributes compared to TGN-attn. These GNN baselines (TGN-ID, TGN-attn, and Jodie) all used a node embedding size of 100.

In an embodiment, the hyperparameter optimization process utilizes Optuna [2] for training 100 models. A set of initial 70 trials are conducted through random sampling, followed by the application of the TPE sampler (Tree-structured Parzen Estimator). Each model incorporated an early stopping mechanism, triggered after 10 epochs without improvement. This criterion, based on the Area Under the ROC Curve, AUC, ensured efficient training. **Table 1** enumerates the hyperparameters and their respective ranges employed in the tuning process of DGS and the baselines. The rows marked with "ALL" denote the hyperparameters that are used in all methods (i.e., DGS, GS, and GNN).

**Table 1:** Hyperparameters ranges for DGS and baseline methods.

| Method | Hyperparameter | min | max |
|--------|----------------|-----|-----|
| DGS | DGS learning rate ($\eta$) | 0.0001 | 1000 |

(continued)

| Method | Hyperparameter | min | max |
|---|---|---|---|
| DGS | Number of softmaxes (x) | 10 | 50 |
| GS | $\alpha$ | 0.1 | 1 |
| GS | $\beta$ | 0.1 | 1 |
| GNN | Memory size | 32 | 256 |
| GNN | Neighbors per node | 5 | 10 |
| GNN | Num GNN layers | 1 | 3 |
| GNN | Size GNN layer | 32 | 256 |
| ALL | Learning rate | 0.0001 | 0.01 |
| ALL | Dropout perc | 0.1 | 0.3 |
| ALL | Weight decay | 0.000000001 | 0.001 |
| ALL | Num of dense layers | 1 | 3 |
| ALL | Size of dense layer | 32 | 256 |

Importantly, the state size for the DGS method is fixed to 100, which is achieved by setting the product of the number of softmax functions and the number of rows per softmax to 100 ($x \times h = 100$). This aligns with the configurations of other GNN baseline models (TGN-ID, TGN-attn, and Jodie) to ensure comparability. Also disclosed, one may vary the number of softmax functions while keeping the number of rows per softmax (h) constant.

Two sets of datasets are used, the first one contains three publicly available datasets [23] from the social and education domains. Their main characteristics are detailed in **Table 2.** All datasets are CTDGs and are labeled. Each dataset is split into train, validation, and test sets respecting time (i.e., all events in the train are older than the events in validation, and all events in validation are older than the events in the test set). In the public datasets, the identical data partitioning strategy is employed by the baseline methods compared against, which also used these datasets.

The second set of datasets contains two real world banking datasets. Due to privacy concerns, it is not possible to disclose the identity of the entities (Financial Institutions or FIs), nor provide exact details regarding the node features. The datasets are referred to as FI-A and FI-B. The graphs in this use-case are constructed by considering the accounts as nodes and the money transfers between accounts as edges. **Table 2** shows the details of these datasets.

**Table 2:** Information and data partitioning strategy for public [23], and proprietary datasets.

| | Wikipedia | Mooc | Reddit | FI-A | FI-B |
|---|---|---|---|---|---|
| #Nodes | 9,227 | 7,047 | 10,984 | ≈400,000 | ≈10,000 |
| #Edges | 157,474 | 411,749 | 672,447 | ≈500,000 | ≈2,000,000 |
| Label type | editing ban | student drop-out | posting ban | AML SAR | AML escalation |
| Positive labels | 0.14% | 0.98% | 0.05% | 2-5% | 20-40% |
| Duration | 30 days | 29 days | 30 days | ≈300 days | ≈600 days |
| Used split (%) | 75-15-15 | 60-20-20 | 75-15-15 | 60-10-30 | 60-10-30 |

In the public datasets, an identical data partitioning strategy is adopted in identical terms to the baseline methods being compared against. In the proprietary datasets (FI-A, FI-B), due to privacy constraints, only approximated details are provided.

The following pertains to Node classification. The results for node classification are detailed in **Table 3,** displaying the average test AUC ± standard deviation, std for the external datasets and the ΔAUC for the FI datasets. To obtain these figures, we retrained the best model, which identified through hyperparameter optimization across 10 different random seeds, was retrained.

The best and second-best performing models are identified for each dataset with the AUC ± std (or ΔAUC ± std) in bold and underline, respectively. To provide an overview, a column showing the average rank was included, representing the mean ranking computed from all datasets. Remarkably, DGS achieves either the highest or the second-highest scores in four out of the five datasets. The exception is the Mooc dataset, where GNN baselines surpass our method. It is crucial to note that these GNN baselines appear to be overfitting the validation split. When evaluated without leveraging the latest edge features, their performance improved, indicating reduced overfitting.

**Table 3:** Node classification results using public and internal datasets.

| Method | AUC ± std | | | ΔAUC ± std | | Average rank |
|---|---|---|---|---|---|---|
| | Wikipedia | Mooc | Reddit | FI-A | FI-B | |
| Raw | 58.5 ± 2.2 | 62.8 ± 0.9 | 55.3 ± 0.8 | 0 | 0 | 6 |
| TGM-ID | 69.3± 0.5 | 86.3± 0.8 | 56.2 ± 3.7 | +1.2 ± 0.1 | +24.3 ± 1.8 | 3.4 |
| Jodie | 68.8 ± 1.3 | 86.1 ± 0.4 | 56.2 ± 2.1 | +1.4 ± 0.1 | +25.0 ± 0.6 | 3.2 |
| TGM-attn | 70.5 ± 4.1 | 86.0 ± 0.9 | 55.6 ± 6.1 | +0.9 ± 0.2 | +22.5 ± 2.5 | 4.2 |
| GS | 90.7 ± 0.3 | 75.0 ± 0.2 | 68.5 ± 1.0 | +1.8 ± 0.5 | +27.8 ± 0.4 | 2 |
| DGS | 89.2 ± 2.2 | 78.7 ± 0.6 | 68.0 ± 1.9 | +3.6 ± 0.2 | +26.9 ± 0.3 | 2.2 |

The following pertains to Inference Runtime. In an embodiment, DGS has a primary goal of achieving reduced inference times. Comparative latency assessments were conducted amongst DGS, Graph-Sprints, and baseline GNN models. These assessments entailed processing 200 batches, each containing 200 events, across distinct datasets (Wikipedia, Mooc, and Reddit) for node classification task. The average times were computed over 10 iterations. Tests were performed on a Linux PC equipped with 24 Intel Xeon CPU cores (3.70GHz) and an NVIDIA GeForce RTX 2080 Ti GPU (11GB).

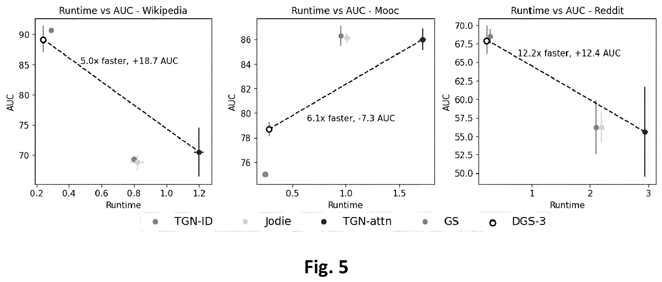

**Figure 5** represents plots comparing the Area Under the ROC Curve, AUC and the runtime obtained with the five models for the three public databases (Wikipedia, Mooc and Reddit).

As depicted in **Figure 5,** DGS exhibited significant speed advantages. On the Reddit dataset, it was more than tenfold faster than the TGN GNN baseline. For the smaller datasets, this speed enhancement ranged approximately between 5 and 6 times. Notably, the runtime of DGS remained stable and was not influenced by the graph's edge count. This stability suggests that speed gains may be more pronounced in larger graphs, especially considering that inference times in the TGN approach are impacted by the number of graph edges. Moreover, when benchmarked against other GNNs baselines (TGN-ID, Jodie), DGS consistently demonstrated significantly lower inference latency.

In comparison to the Graph-Sprints framework, known for its low latency, DGS generally exhibited marginally superior speed, especially noticeable in the Wikipedia and Reddit datasets, with latencies of 0.24 versus 0.29 seconds. This performance gain can be attributed to the higher feature count in these datasets (172 features), which potentially increases the processing time for Graph-Sprints due to the elevated feature volume. In contrast, for the Mooc dataset, which has only 7 edge features, Graph-Sprints showed a slight edge in speed (0.24 versus 0.28 seconds).

The following pertains to Ablation Study. A comparative analysis of three distinct variants of the disclosed method, differentiated primarily by their parameterization complexity.

The initial variant, designated as "DGS-s", constitutes the most basic approach wherein scalar parameters $\alpha$ and $\beta$, **107** and **108** respectively, are learned. Moreover, instead of employing a learnable embedding matrix, **109,** "DGS-s" adopts the static embedding function utilized by Graph-Sprints.

The subsequent variant, "DGS-v", retains the fixed embedding function but transitions to vectorized parameters, $\vec{\alpha}$ and $\vec{\beta}$, **107** and **108** respectively. This modification is intended to explore the effects of enhancing the parameter complexity on the performance of the model.

The final variant, the principal model described herein as "DGS", not only incorporates vectorized parameters $\vec{\alpha}$ and $\vec{\beta}$, **107** and **108** respectively but also integrates a learnable embedding matrix, **109.** This comprehensive approach aims to assess the impact of maximal parameter flexibility on the model's efficacy.

**Table 4** presents the results of the three variants for node classification across five different datasets. It displays the average test AUC ± standard deviation for the external datasets and the ΔAUC for the AML datasets.

**Table 4:** Ablation study of DGS, with node classification results.

| Method | AUC ± std | | | ΔAUC ± std | | Average rank |
|---|---|---|---|---|---|---|
| | Wikipedia | Mooc | Reddit | FI-A | FI-B | |
| DGS-s | 88.2 ± 0.6 | 73.8 ± 0.5 | 65.8 ± 0.8 | +1.8 ± 0.3 | +25.8 ± 0.7 | 3 |
| DGS-v | 91.0 ± 0.3 | 75.2 ± 0.3 | 67.2 ± 0.4 | +3.2 ± 0.1 | +26.7 ± 0.2 | 1.8 |

(continued)

| Method | AUC ± std | | | ΔAUC ± std | | Average rank |
| --- | --- | --- | --- | --- | --- | --- |
| | Wikipedia | Mooc | Reddit | FI-A | FI-B | |
| DGS | 89.2 ± 2.2 | 78.7 ± 0.6 | 68.0 ± 1.9 | +3.6 ± 0.2 | +26.9 ± 0.3 | 1.2 |

CTDGs are essential for representing connected and evolving systems. While methods to learn these graphs show significant potential for diverse applications, the computational and memory demands of existing approaches limit their feasibility in low-latency scenarios.

The disclosure presents a real-time graph representation learning method for CTDGs, named DGS. This approach stands out in the realm of real-time graph representation learning by addressing the latency challenges associated with current deep learning methods. It also obviates the need for manual tuning and domain-specific expertise, which are prerequisites for traditional feature extraction methods. To validate the effectiveness and applicability of DGS, a thorough evaluation using two internal AML datasets and additional datasets from various fields is introduced, thereby demonstrating its versatility.

It is also disclosed:

An embodiment includes integrating advanced optimization algorithms, such as Adam (Adaptive Moment Estimation), to potentially supplant stochastic gradient descent.

Another embodiment includes extending the disclosed DGS framework to accommodate more complex graph types, like heterogeneous graphs. Investigating such graphs could broaden the framework's applicability.

Yet another embodiment includes enhancing the model's adaptability by allowing the parameters $\vec{\alpha}$ and $\vec{\beta}$ to be data-driven.

In an embodiment, the softmax function is used to ensure that the cumulative sum of all elements within a single embedded feature is equal to one, with each individual element ranging from 0 to 1. However, alternative standardization methods may be addressed in future research.

In an embodiment, the incorporation of an advanced optimization algorithms such as Adam may replace the use of stochastic gradient descent, disclosed so far, in updating the DGS parameters during forward-mode AD. The adoption of these optimization algorithms may facilitate the learning of optimal parameters and possibly more easily achieve a good performance.

In an embodiment, the disclosed DGS method may be adaptable to heterogeneous graph structures. This evolution may extend the method's applicability across a diverse array of graph-based problem domains. One viable approach is to employ distinct embedding matrices for different node or edge types, where each matrix maps varies input features to a consistent embedding dimension. This method, however, may present challenges in mini-batch training, necessitating the segregation of edges by type for effective mapping.

In another embodiment, a unique update process may be implemented for each node or edge type, resulting in the creation of multiple sub-embeddings. These sub-embeddings can be concatenated to form a unified final embedding. The key consideration here is determining whether to learn a singular embedding matrix W per node or edge type, or to learn a complete set of parameters - $\vec{\alpha}$, $\vec{\beta}$ and $W$ - for each type. The decision on this architecture is likely to be dependent on the use cases.

Central to this embodiment is that the structure of the model needs to be defined, after which the parameters are learned autonomously during training, obviating the need for manual adjustments as required in Graph-Sprints.

A possible embodiment may allow the enabling of input-dependent adaptability for the parameters alpha, $\vec{\alpha}$, and beta, $\vec{\beta}$. This embodiment may amplify the model's responsiveness to diverse data inputs. As such, the state update equation may undergo modification, integrating trainable matrices $W_1$, and $W_2$ of dimension ($s \times f$), where s represents the embedding size and f denotes the number of input features.

To ensure the parameter values remain within the range [0, 1], a sigmoid function per feature, denoted as $\psi$, can be employed. The parameters are thus defined as:

$$\vec{\alpha} = \psi(W_1 F_t)$$

and

$$\vec{\beta} = \psi(W_2 F_t)$$

The revised state update formula, encapsulated in equation (3), effectively integrates these changes:

$$\vec{S_t} = \psi(W_2 F_t) \odot \overrightarrow{S_{t-1}} + \left(1 - \psi(W_2 F_t)\right)$$
$$\odot \left(\left(1 - \psi(W_1 F_t)\right) \odot \left(\oplus_{i=1}^{x} \vec{\sigma}(W_i F_t)\right) + \psi(W_1 F_t) \odot \overrightarrow{S_{t-1}^*}\right) \tag{3}$$

In an embodiment, the modification seen in equation /3) may enhance the accuracy of the DGS model in processing varying inputs.

The disclosed embodiments represent critical steps towards augmenting the sophistication and versatility of the DGS model, positioning them at the forefront of graph representation learning tools.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The present disclosure is also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit. For example, models were run on Linux PC with Intel Xeon CPU cores and a NVIDIA GeForce RTX. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

A computer data processor, as used herein, refers to any system, device, or apparatus capable of processing data in accordance with the methods described in this disclosure. The computer data processor may include one or more processors, such as a central processing unit (CPU), a graphics processing unit (GPU), or any combination thereof. These processors may be implemented as a single chip, a multi-core processor, a distributed computing system, or any other suitable configuration. For example, this can be a central processing unit (CPU), such as an Intel® Core™ i7 processor, and memory modules, including 16 GB of DDR4 RAM. The system may include a solid-state drive (SSD) for storage, one or more optional GPUs (e.g., NVIDIA® GeForce RTX™ 3060), and runs a standard operating system, such as Microsoft® Windows® or Linux®. For example, this can be an embedded system utilizing a microcontroller, such as the ARM® Cortex®-M4 processor, with onboard memory (e.g., 1 MB of flash storage and 256 KB of SRAM). For example, this can also be a cloud-based virtual machine hosted on a server infrastructure, such as an Amazon Web Services (AWS) EC2 instance, featuring virtual CPUs (vCPUs) based on Intel® Xeon® or AMD EPYC™ processors. The instance can be configured for example with 32 GB of RAM, 1 TB of elastic block storage (EBS), and executes server-side software designed to perform the computational processes disclosed in this specification.

In exemplary embodiments, the models were executed on a computing system comprising a Linux-based operating environment, Intel® Xeon® multi-core central processing units (CPUs), and a NVIDIA® GeForce® RTX-series GPU. The use of such parallel processing or neuronal network processing units enables a significant reduction in computational latency and an improvement in throughput for the training and inference stages of the disclosed models. Significantly, the disclosed architecture is inherently suited for implementation by parallel processing or neuronal network processing units.

Consequently, the invention leverages the architectural advantages of parallel processing to achieve enhanced computational efficiency, scalability, and responsiveness, thereby addressing the technical problem of optimizing resource utilization in high-dimensional machine learning tasks.

The computer data processor may further include memory (e.g., random access memory (RAM), read-only memory (ROM), flash memory, or other suitable storage devices) for storing instructions and data. The processor executes instructions stored in memory to perform the functions described in this specification. The instructions may be implemented in any programming language, including but not limited to assembly language, C, C++, Python, or Java.

The computer data processor may communicate with input/output devices (e.g., a keyboard, mouse, touchscreen, or display), peripheral devices, or external systems via wired or wireless connections, such as USB, Bluetooth®, Wi-Fi®, or Ethernet. The data processor may also be integrated with or connected to a network, including a local area network (LAN), wide area network (WAN), or the internet, to receive and transmit data.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

<u>References</u>

[1] Ahmed, N.K., Rossi, R.A., Lee, J.B., Willke, T.L., Zhou, R., Kong, X., Eldardiry, H.: role2vec: Role-based network embeddings. Proc. DLG KDD pp. 1-7 (2019).

[2] Akiba, T., Sano, S., Yanase, T., Ohta, T., Koyama, M.: Optuna: A nextgeneration hyperparameter optimization framework. In: Proceedings of the 25th ACM SIGKDD international conference on knowledge discovery & data mining. pp. 2623-2631 (2019).

[3] Baydin, A.G., Pearlmutter, B.A., Radul, A.A., Siskind, J.M.: Automatic differentiation in machine learning: a survey. Journal of Marchine Learning Research 18, 1-43 (2018).

[4] Bilot, T., El Madhoun, N., Al Agha, K., Zouaoui, A.: Graph neural networks for intrusion detection: A survey. IEEE Access (2023).

[5] Chu, J., Lin, Z.: Incorporating exponential smoothing into mlp: A simple but effective sequence model. arXiv preprint arXiv:2403.17445 (2024).

[6] Cooijmans, T., Martens, J.: On the variance of unbiased online recurrent optimization. arXiv preprint arXiv:1902.02405 (2019).

[7] Costa, L.d.F., Rodrigues, F.A., Travieso, G., Villas Boas, P.R.: Characterization of complex networks: A survey of measurements. Advances in physics 56(1), 167-242 (2007).

[8] Dai, H., Wang, Y., Trivedi, R., Song, L.: Deep coevolutionary network: Embedding user and item features for recommendation. arXiv preprint arXiv:1609.03675 (2016).

[9] Dong, Y., Chawla, N.V., Swami, A.: metapath2vec: Scalable representation learning for heterogeneous networks. In: Proceedings of the 23rd ACM SIGKDD international conference on knowledge discovery and data mining. pp. 135-144 (2017).

[10] Eddin, A.N., Bono, J., Aparício, D., Ferreira, H., Ascensão, J.T., Ribeiro, P., Bizarro, P.: From random-walks to graph-sprints: a low-latency node embedding framework on continuous-time dynamic graphs. In: Proceedings of the Fourth ACM International Conference on AI in Finance. pp. 176-184 (2023).

[11] Febrinanto, F.G., Xia, F., Moore, K., Thapa, C., Aggarwal, C.: Graph lifelong learning: A survey. IEEE Computational Intelligence Magazine 18(1), 32-51 (2023).

[12] Fey, M., Lenssen, J.E.: Fast graph representation learning with PyTorch Geometric. In: ICLR Workshop on Representation Learning on Graphs and Manifolds (2019).

[13] Goyal, P., Kamra, N., He, X., Liu, Y.: Dyngem: Deep embedding method for dynamic graphs. arXiv preprint arXiv:1805.11273 (2018).

[14] Grover, A., Leskovec, J.: node2vec: Scalable feature learning for networks. In: Proceedings of the 22nd ACM SIGKDD international conference on Knowledge discovery and data mining. pp. 855-864 (2016).

[15] Hamilton, W., Ying, Z., Leskovec, J.: Inductive representation learning on large graphs. In: Advances in neural information processing systems. pp. 1024-1034 (2017).

[16] Hamilton, W.L., Ying, R., Leskovec, J.: Representation learning on graphs: Methods and applications. arXiv preprint arXiv:1709.05584 (2017).

[17] Jin, D., Heimann, M., Rossi, R.A., Koutra, D.: node2bits: Compact time-and attribute-aware node representations for user stitching. In: Joint European Conference on Machine Learning and Knowledge Discovery in Databases. pp. 483-506. Springer (2019).

[18] Jin, D., Kim, S., Rossi, R.A., Koutra, D.: From static to dynamic node embeddings. arXiv preprint arXiv:2009.10017 (2020).

[19] Jin, D., Kim, S., Rossi, R.A., Koutra, D.: On generalizing static node embedding to dynamic settings. In: Proceedings of the Fifteenth ACM International Conference on Web Search and Data Mining. pp. 410-420 (2022).

[20] Jin, M., Koh, H.Y., Wen, Q., Zambon, D., Alippi, C., Webb, G.I., King, I., Pan, S.: A survey on graph neural networks for time series: Forecasting, classification, imputation, and anomaly detection. arXiv preprint arXiv:2307.03759 (2023).

[21] Jin, M., Li, Y.F., Pan, S.: Neural temporal walks: Motif-aware representation learning on continuous-time dynamic graphs. In: Advances in Neural Information Processing Systems (2022).

[22] Karypis, G., Kumar, V.: Metis: A software package for partitioning unstructured graphs, partitioning meshes, and computing fill-reducing orderings of sparse matrices (1997)

[23] Kumar, S., Zhang, X., Leskovec, J.: Predicting dynamic embedding trajectory in temporal interaction networks. In: Proceedings of the 25th ACM SIGKDD international conference on Knowledge discovery and data mining. ACM (2019).

[24] Lee, J.B., Nguyen, G., Rossi, R.A., Ahmed, N.K., Koh, E., Kim, S.: Dynamic node embeddings from edge streams. IEEE Transactions on Emerging Topics in Computational Intelligence 5(6), 931-946 (2020).

[25] Liu, X., Hsieh, P.C., Duffield, N., Chen, R., Xie, M., Wen, X.: Real-time streaming graph embedding through local actions. In: Companion proceedings of the 2019 world wide web conference. pp. 285-293 (2019).

[26] Majeed, A., Rauf, I.: Graph theory: A comprehensive survey about graph theory applications in computer science and social networks. Inventions 5(1), 10 (2020).

[27] Minsky, M.: Steps toward artificial intelligence. Proceedings of the IRE 49(1), 8-30 (1961).

[28] Nguyen, G.H., Lee, J.B., Rossi, R.A., Ahmed, N.K., Koh, E., Kim, S.: Continuous time dynamic network embeddings. In: Companion proceedings of the web conference 2018. pp. 969-976 (2018).

[29] Perozzi, B., Al-Rfou, R., Skiena, S.: Deepwalk: Online learning of social representations. In: Proceedings of the 20th ACM SIGKDD international conference on Knowledge discovery and data mining. pp. 701-710 (2014).

[30] Ribeiro, L.F., Saverese, P.H., Figueiredo, D.R.: struc2vec: Learning node representations from structural identity. In: Proceedings of the 23rd ACM SIGKDD international conference on knowledge discovery and data mining. pp. 385-394 (2017).

[31] Ribeiro, P., Paredes, P., Silva, M.E., Aparicio, D., Silva, F.: A survey on subgraph counting: concepts, algorithms, and applications to network motifs and graphlets. ACM Computing Surveys (CSUR) 54(2), 1-36 (2021).

[32] Rossi, E., Chamberlain, B., Frasca, F., Eynard, D., Monti, F., Bronstein, M.: Temporal graph networks for deep learning on dynamic graphs. In: ICML 2020 Workshop on Graph Representation Learning (2020).

[33] Sajjad, H.P., Docherty, A., Tyshetskiy, Y.: Efficient representation learning using random walks for dynamic graphs. arXiv preprint arXiv:1901.01346 (2019).

[34] Sankar, A., Wu, Y., Gou, L., Zhang, W., Yang, H.: Dysat: Deep neural representation learning on dynamic graphs via self-attention networks. In: Proceedings of the 13th international conference on web search and data mining. pp. 519-527 (2020).

[35] Sarkar, P., Moore, A.W.: Fast nearest-neighbor search in disk-resident graphs. In: Proceedings of the 16th ACM SIGKDD international conference on Knowledge discovery and data mining. pp. 513-522 (2010).

[36] Sutton, R.S.: Temporal credit assignment in reinforcement learning. University of Massachusetts Amherst (1984).

[37] Tang, J., Qu, M., Wang, M., Zhang, M., Yan, J., Mei, Q.: Line: Large-scale information network embedding. In: Proceedings of the 24th international conference on world wide web. pp. 1067-1077 (2015).

[38] Tong, H., Faloutsos, C., Pan, J.Y.: Fast random walk with restart and its applications. In: Sixth international conference on data mining (ICDM'06). pp. 613-622. IEEE (2006).

[39] Vaswani, A., Shazeer, N., Parmar, N., Uszkoreit, J., Jones, L., Gomez, A.N., Kaiser, L., Polosukhin, I.: Attention is all you need. Advances in neural information processing systems 30 (2017).

[40] Wang, L., Huang, C., Ma, W., Liu, R., Vosoughi, S.: Hyperbolic node embedding for temporal networks. Data Mining and Knowledge Discovery 35(5), 1906-1940 (2021).

[41] Wang, X., Lyu, D., Li, M., Xia, Y., Yang, Q., Wang, X., Wang, X., Cui, P., Yang, Y., Sun, B., et al.: Apan: Asynchronous propagation attention network for real-time temporal graph embedding. In: Proceedings of the 2021 international conference on management of data. pp. 2628-2638 (2021).

[42] Wang, Y., Chang, Y.Y., Liu, Y., Leskovec, J., Li, P.: Inductive representation learning in temporal networks via causal anonymous walks. arXiv preprint arXiv:2101.05974 (2021).

[43] Williams, R.J., Peng, J.: An efficient gradient-based algorithm for on-line training of recurrent network trajectories. Neural computation 2(4), 490-501 (1990).

[44] Williams, R.J., Zipser, D.: A learning algorithm for continually running fully recurrent neural networks. Neural computation 1(2), 270-280 (1989).

[45] Wu, W., Li, B., Luo, C., Nejdl, W.: Hashing-accelerated graph neural networks for link prediction. In: Proceedings of the Web Conference 2021. pp. 2910-2920 (2021).

[46] Xia, F., Liu, J., Nie, H., Fu, Y., Wan, L., Kong, X.: Random walks: A review of algorithms and applications. IEEE Transactions on Emerging Topics in Computational Intelligence 4(2), 95-107 (2019).

[47] Xu, D., Ruan, C., Korpeoglu, E., Kumar, S., Achan, K.: Inductive representation learning on temporal graphs. arXiv preprint arXiv:2002.07962 (2020).

[48] Yang, C., Pal, A., Zhai, A., Pancha, N., Han, J., Rosenberg, C., Leskovec, J.: Multisage: Empowering gcn with contextualized multi-embeddings on web-scale multipartite networks. In: Proceedings of the 26th ACM SIGKDD International Conference on Knowledge Discovery & Data Mining. pp. 2434-2443 (2020).

[49] Yang, D., Qu, B., Yang, J., Wang, L., Cudre-Mauroux, P.: Streaming graph embeddings via incremental neighborhood sketching. IEEE Transactions on Knowledge and Data Engineering 35(5), 5296-5310 (2022).

[50] Ying, R., He, R., Chen, K., Eksombatchai, P., Hamilton, W.L., Leskovec, J.: Graph convolutional neural networks for web-scale recommender systems. In: Proceedings of the 24th ACM SIGKDD International Conference on Knowledge Discovery & Data Mining. pp. 974-983 (2018).

[51] Zhang, Z., Cui, P., Zhu, W.: Deep learning on graphs: A survey. IEEE Transactions on Knowledge and Data Engineering 34(1), 249-270 (2020).

[52] Zhou, J., Cui, G., Hu, S., Zhang, Z., Yang, C., Liu, Z., Wang, L., Li, C., Sun, M.: Graph neural networks: A review of methods and applications. AI open 1, 57-81 (2020).

[53] Zhu, Q., Wei, H., Sisman, B., Zheng, D., Faloutsos, C., Dong, X.L., Han, J.: Collective multi-type entity alignment between knowledge graphs. In: Proceedings of The Web Conference 2020. pp. 2241-2252 (2020).

**Claims**

1. Memory-constrained computer-implemented method for low-latency dynamic embedding generation for a transactional graph from a real-time transaction stream comprising transaction data records, wherein each transaction corresponds to an edge and is carried between a first node and a second node among a plurality of nodes, for obtaining a feature embedding for at least a portion of the plurality of nodes, by using a computer system having a hardware data processor for recurrently updating a state array in a volatile memory corresponding to a feature embedding of each node of the at least a portion of the plurality of nodes, the method comprising the steps of:

   receiving a transaction data record (114) from the transaction stream;
   encoding the received transaction data record to a feature array (104);
   first-stage propagating (101), the encoded feature array, a first node array state of the node feature embedding for the first node, and a second node array state of the node feature embedding for the second node, through an embedding 2-dimensional array (109) for mapping the encoded feature mapping, a first discount array (107) for weighing node proximity, and a second discount array (108) for weighing temporal retention, to obtain an updated first node array state; and
   second-stage propagating the updated first node array state by a machine-learning classifier to obtain a classification score;

   wherein the method further comprises:

   obtaining, by forward-mode Automatic Differentiation, AD, a first-stage gradient array of the updated first node array state in respect of the embedding 2-dimensional array, the first discount array, and the second discount array;
   obtaining, by backpropagation from a second-stage loss function on the classification score, a second-stage gradient array of the loss function with respect of the updated first node array state;
   obtaining a classification-loss gradient array of the classification loss in respect of the embedding 2-dimensional array, the first discount array, and the second discount array by multiplying the first-stage gradient array and the second-stage gradient array;
   updating the embedding 2-dimensional array, the first discount array, and the second discount array by taking a gradient descent step using the obtained classification-loss gradient array; and
   using the updated embedding 2-dimensional array, the first discount array, and
   the second discount array to generate, for the transactional graph, an updated state array of each node of the at least a portion of the plurality of nodes, as feature embeddings.

2. Memory-constrained computer-implemented method according to the previous claim wherein the computer system comprises a data processor coupled to the volatile memory wherein said volatile memory is insufficient to store the entire transactional graph, in particular wherein said volatile memory is a physical volatile memory.

3. Memory-constrained computer-implemented method according to any of the previous claims wherein the transactional graph is a continuous-time dynamic graph, CTDG, and the method comprises repeatedly carrying the claimed steps as each transaction data record is received.

4. Memory-constrained computer-implemented method according to any of the previous claims wherein the method comprises repeatedly carrying the claimed steps in batches, wherein each batch comprises a plurality of transaction data records.

5. Memory-constrained computer-implemented method according to any of the previous claims, wherein the first-stage propagating (101) comprises the steps of:

obtaining a current embedding array (B) by applying the embedding 2-dimensional array (109) to the encoded feature array (104) and applying a softmax probability distribution;
obtaining a first weighted array (A) between the obtained current embedding array (B) obtained in the previous step and the second node array state (106) using the first discount array (107);
obtaining a second weighted array between the obtained first weighted array (A) and the first node array state (105) using the second discount array (108);
using the obtained second weighted array, as the updated first node array state (110).

6. Memory-constrained computer-implemented method according to any of the previous claims, comprising the steps of:

first-stage propagating the encoded feature array, a second node array state of the node feature embedding for the second node, and a first node array state of the node feature embedding for the first node, through an embedding 2-dimensional array (109) for mapping the encoded feature mapping, a first discount array (107) for weighing node proximity, and a second discount array (108) for weighing temporal retention, to obtain an updated second node array state; and
second-stage propagating the updated second node array state by a machine-learning classifier to obtain a classification score;

wherein the method further comprises:

obtaining, by forward-mode Automatic Differentiation, AD, a first-stage gradient array of the updated second node array state in respect of the embedding 2-dimensional array, the first discount array, and the second discount array;
obtaining, by backpropagation from a second-stage loss function on the classification score, a second-stage gradient array of the loss function with respect of the updated second node array state;
obtaining a classification-loss gradient array of the classification loss in respect of the embedding 2-dimensional array, the first discount array, and the second discount array by multiplying the first-stage gradient array and the second-stage gradient array;
updating the embedding 2-dimensional array, the first discount array, and the second discount array taking a gradient descent step using the obtained classification-loss gradient array; and
using the updated embedding 2-dimensional array, the first discount array, and
the second discount array to generate, for the transactional graph, an updated state array of each node of the at least a portion of the plurality of nodes, as feature embeddings.

7. Memory-constrained computer-implemented method according to any of the previous claims wherein the second-stage propagating is by an artificial neural-network.

8. Memory-constrained computer-implemented method according to any of the previous claims, comprising the step of outputting the updated embedding 2-dimensional array, the first discount array, and the second discount array to generate subsequent embeddings for the transactional graph.

9. Memory-constrained computer-implemented method according to any of the previous claims wherein the low-latency dynamically generated embeddings comprise sub-embeddings concatenable to form a unified embedding.

10. Memory-constrained computer-implemented method according to any of the previous claims wherein the first discount array (107) is obtained by applying a first trainable 2-dimension array ($W_1$) to the feature array (104), and the second discount array (108) is obtained by applying a second trainable 2-dimension array ($W_2$) to the feature array (104).

11. Memory-constrained computer-implemented method for low-latency inference for a transactional graph from a real-time transaction stream comprising transaction data records, wherein each transaction corresponds to an edge and is carried between a first node and a second node among a plurality of nodes, by using a computer system for applying the low-latency dynamically generated embedding 2-dimensional array, first discount array, and second discount array of any of the previous claims, the method comprising the steps of:

receiving a transaction data record (114) from the transaction stream;
encoding the received transaction data record to a feature array (104);

first-stage propagating (101) the encoded feature array, a first node array state of the node feature embedding for the first node, and a second node array state of the node feature embedding for the second node, through the embedding 2-dimensional array (109) for mapping the encoded feature mapping, the first discount array (107) for weighing node proximity, and the second discount array (108) for weighing temporal retention, to obtain an updated first node array state; and
second-stage propagating the updated first node array state by the machine-learning classifier (102) to obtain a classification score.

12. Computer device comprising a data processor arranged to carry out any of the previous claims.

13. Computer device according to the previous claim comprising a computer-readable storage medium comprising the low-latency dynamically generated embeddings of the claims 1-10.

14. Computer device according to the previous claim wherein the first-stage propagating is carried out using a GPU or NPU, the second-stage propagating and backpropagating is carried out using a GPU or NPU, and the obtaining of the first-stage gradient array, of the second-stage gradient array, and of the classification-loss gradient array is carried out using a GPU or NPU, in particular wherein data loading in batches comprising transaction data records (114) from the transaction stream is carried out using a CPU.

15. Computer program product embodied in a non-transitory computer-readable medium comprising computer program instructions, which when executed by a computer processor, cause the computer processor to carry out the method of any of the claims 1-11.

**Fig. 1**

**Fig. 2**

**Fig. 3**

---

**Algorithm 1** $DGS$: Graph Representation Learning (Eq. 2)

---

**Require:** $EdgeStream$       ▷ Stream of arriving edges $e_{i,j}$
**Require:** $f$       ▷ Number of input features
**Require:** $s$       ▷ Embedding size
**Require:** $x$       ▷ Number of softmax functions
**Require:** $W[s \times f]$       ▷ Learnt embedding matrix
**Require:** $\vec{\alpha}$       ▷ Learnt forgetting coefficient
**Require:** $\vec{\beta}$       ▷ Learnt forgetting coefficient

$W_{reshape} \leftarrow W.\text{reshape}(x, s/x, f)$       ▷ Reshape $W$ for softmax application
**for** $e_{v,u} \in EdgeStream$ **do**
    **Get** $\vec{S}_u, \vec{S}_v$       ▷ Summaries of nodes $u, v$ $(t-1)$
    **Get** $F_t$       ▷ Features of edge $e_{v,u}$
    $enc\_feats \leftarrow \text{MatrixMultiply}(W_{reshape}, F_t)$       ▷ Encode features
    $norm\_feats \leftarrow \vec{\sigma}(enc\_feats, \text{axis} = -1)$       ▷ Normalize features
    $norm\_feats \leftarrow norm\_feats.reshape(s)$       ▷ Reshape Normalized features
    $\vec{S}_u \leftarrow \vec{\beta} \odot \vec{S}_u + (1 - \vec{\beta}) \odot ((1 - \vec{\alpha}) \odot norm\_feats + \vec{\alpha} \odot \vec{S}_v)$       ▷ Update node $u$
summary
    $\vec{S}_v \leftarrow \vec{\beta} \odot \vec{S}_v + (1 - \vec{\beta}) \odot ((1 - \vec{\alpha}) \odot norm\_feats + \vec{\alpha} \odot \vec{S}_u)$       ▷ Update node $v$
summary
**end for**

---

**Fig. 4**

**Fig. 5**

Europäisches
Patentamt

European
Patent Office

Office européen
des brevets

# EUROPEAN SEARCH REPORT

**Application Number**

EP 25 17 3822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG CHUNYANG ET AL: "PiPAD Pipelined and Parallel Dynamic GNN Training on GPUs", PROCEEDINGS OF THE 12TH ACM SIGPLAN INTERNATIONAL CONFERENCE ON CERTIFIED PROGRAMS AND PROOFS, ACMPUB27, NEW YORK, NY, USA, 25 February 2023 (2023-02-25), pages 405-418, XP059003002, DOI: 10.1145/3572848.3577487 ISBN: 979-8-4007-0068-2 * abstract * * section"1 Introduction" * * section "2.1 Dynamic Graph Neural Networks" * * section "3.1 Performance Bottlenecks of DGNN Training" * ----- | 1-15 | INV. G06F16/901 |

TECHNICAL FIELDS
SEARCHED (IPC)

G06F

The present search report has been drawn up for all claims

| Place of search | Date of completion of the search | Examiner |
|---|---|---|
| Berlin | 7 July 2025 | Schmidt, Axel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AHMED, N.K.** ; **ROSSI, R.A.** ; **LEE, J.B.** ; **WILLKE, T.L.** ; **ZHOU, R.** ; **KONG, X.** ; **ELDARDIRY, H.** role2vec: Role-based network embeddings. *Proc. DLG KDD*, 2019, 1-7
- **AKIBA, T.** ; **SANO, S.** ; **YANASE, T.** ; **OHTA, T.** ; **KOYAMA, M.** Optuna: A nextgeneration hyperparameter optimization framework. *Proceedings of the 25th ACM SIGKDD international conference on knowledge discovery & data mining*, 2019, 2623-2631
- **BAYDIN, A.G.** ; **PEARLMUTTER, B.A.** ; **RADUL, A.A.** ; **SISKIND, J.M.** Automatic differentiation in machine learning: a survey. *Journal of Marchine Learning Research*, 2018, vol. 18, 1-43
- **BILOT, T.** ; **EL MADHOUN, N.** ; **AL AGHA, K.** ; **ZOUAOUI, A.** Graph neural networks for intrusion detection: A survey. *IEEE Access*, 2023
- **CHU, J.** ; **LIN, Z.** Incorporating exponential smoothing into mlp: A simple but effective sequence model. *arXiv preprint arXiv:2403.17445*, 2024
- **COOIJMANS, T.** ; **MARTENS, J.** On the variance of unbiased online recurrent optimization. *arXiv preprint arXiv:1902.02405*, 2019
- **COSTA, L.D.F.** ; **RODRIGUES, F.A.** ; **TRAVIESO, G.** ; **VILLAS BOAS, P.R.** Characterization of complex networks: A survey of measurements. *Advances in physics*, 2007, vol. 56 (1), 167-242
- **DAI, H.** ; **WANG, Y.** ; **TRIVEDI, R.** ; **SONG, L.** Deep coevolutionary network: Embedding user and item features for recommendation. *arXiv preprint arXiv:1609.03675*, 2016
- **DONG, Y.** ; **CHAWLA, N.V.** ; **SWAMI, A.** metapath2vec: Scalable representation learning for heterogeneous networks. *Proceedings of the 23rd ACM SIGKDD international conference on knowledge discovery and data mining*, 2017, 135-144
- **EDDIN, A.N.** ; **BONO, J.** ; **APARÍCIO, D.** ; **FERREIRA, H.** ; **ASCENSÃO, J.T.** ; **RIBEIRO, P.** ; **BIZARRO, P.** From random-walks to graph-sprints: a low-latency node embedding framework on continuous-time dynamic graphs. *Proceedings of the Fourth ACM International Conference on AI in Finance*, 2023, 176-184
- **FEBRINANTO, F.G.** ; **XIA, F.** ; **MOORE, K.** ; **THAPA, C.** ; **AGGARWAL, C.** Graph lifelong learning: A survey. *IEEE Computational Intelligence Magazine*, 2023, vol. 18 (1), 32-51

- **FEY, M.** ; **LENSSEN, J.E.** Fast graph representation learning with PyTorch Geometric. *ICLR Workshop on Representation Learning on Graphs and Manifolds*, 2019
- **GOYAL, P.** ; **KAMRA, N.** ; **HE, X.** ; **LIU, Y.** Dyngem: Deep embedding method for dynamic graphs. *arXiv preprint arXiv:1805.11273*, 2018
- **GROVER, A.** ; **LESKOVEC, J.** node2vec: Scalable feature learning for networks. *Proceedings of the 22nd ACM SIGKDD international conference on Knowledge discovery and data mining*, 2016, 855-864
- **HAMILTON, W.** ; **YING, Z.** ; **LESKOVEC, J.** Inductive representation learning on large graphs. *Advances in neural information processing systems*, 2017, 1024-1034
- **HAMILTON, W.L.** ; **YING, R.** ; **LESKOVEC, J.** Representation learning on graphs: Methods and applications. *arXiv preprint arXiv:1709.05584*, 2017
- node2bits: Compact time-and attribute-aware node representations for user stitching. **JIN, D.** ; **HEIMANN, M.** ; **ROSSI, R.A.** ; **KOUTRA, D.** Joint European Conference on Machine Learning and Knowledge Discovery in Databases. Springer, 2019, 483-506
- **JIN, D.** ; **KIM, S.** ; **ROSSI, R.A.** ; **KOUTRA, D.** From static to dynamic node embeddings. *arXiv preprint arXiv:2009.10017*, 2020
- **JIN, D.** ; **KIM, S.** ; **ROSSI, R.A.** ; **KOUTRA, D.** On generalizing static node embedding to dynamic settings. *Proceedings of the Fifteenth ACM International Conference on Web Search and Data Mining*, 2022, 410-420
- **JIN, M.** ; **KOH, H.Y.** ; **WEN, Q.** ; **ZAMBON, D.** ; **ALIPPI, C.** ; **WEBB, G.I.** ; **KING, I.** ; **PAN, S.** A survey on graph neural networks for time series: Forecasting, classification, imputation, and anomaly detection. *arXiv preprint arXiv:2307.03759*, 2023
- **JIN, M.** ; **LI, Y.F.** ; **PAN, S.** Neural temporal walks: Motif-aware representation learning on continuous-time dynamic graphs. *Advances in Neural Information Processing Systems*, 2022
- **KARYPIS, G.** ; **KUMAR, V.** *Metis: A software package for partitioning unstructured graphs, partitioning meshes, and computing fill-reducing orderings of sparse matrices*, 1997

- **KUMAR, S.** ; **ZHANG, X.** ; **LESKOVEC, J.** Predicting dynamic embedding trajectory in temporal interaction networks. *Proceedings of the 25th ACM SIGKDD international conference on Knowledge discovery and data mining. ACM*, 2019

- **LEE, J.B.** ; **NGUYEN, G.** ; **ROSSI, R.A.** ; **AHMED, N.K.** ; **KOH, E.** ; **KIM, S.** Dynamic node embeddings from edge streams. *IEEE Transactions on Emerging Topics in Computational Intelligence*, 2020, vol. 5 (6), 931-946

- **LIU, X.** ; **HSIEH, P.C.** ; **DUFFIELD, N.** ; **CHEN, R.** ; **XIE, M.** ; **WEN, X.** Real-time streaming graph embedding through local actions. *Companion proceedings of the 2019 world wide web conference*, 2019, 285-293

- **MAJEED, A.** ; **RAUF, I.** Graph theory: A comprehensive survey about graph theory applications in computer science and social networks. *Inventions*, 2020, vol. 5 (1), 10

- **MINSKY, M.** Steps toward artificial intelligence. *Proceedings of the IRE*, 1961, vol. 49 (1), 8-30

- **NGUYEN, G.H.** ; **LEE, J.B.** ; **ROSSI, R.A.** ; **AHMED, N.K.** ; **KOH, E.** ; **KIM, S.** Continuous time dynamic network embeddings. *Companion proceedings of the web conference 2018*, 2018, 969-976

- **PEROZZI, B.** ; **AL-RFOU, R.** ; **SKIENA, S.** Deepwalk: Online learning of social representations. *Proceedings of the 20th ACM SIGKDD international conference on Knowledge discovery and data mining*, 2014, 701-710

- **RIBEIRO, L.F.** ; **SAVERESE, P.H.** ; **FIGUEIREDO, D.R.** struc2vec: Learning node representations from structural identity. *Proceedings of the 23rd ACM SIGKDD international conference on knowledge discovery and data mining.*, 2017, 385-394

- **RIBEIRO, P.** ; **PAREDES, P.** ; **SILVA, M.E.** ; **APARICIO, D.** ; **SILVA, F.** A survey on subgraph counting: concepts, algorithms, and applications to network motifs and graphlets. *ACM Computing Surveys (CSUR)*, 2021, vol. 54 (2), 1-36

- **ROSSI, E.** ; **CHAMBERLAIN, B.** ; **FRASCA, F.** ; **EYNARD, D.** ; **MONTI, F.** ; **BRONSTEIN, M.** Temporal graph networks for deep learning on dynamic graphs. *ICML 2020 Workshop on Graph Representation Learning*, 2020

- **SAJJAD, H.P.** ; **DOCHERTY, A.** ; **TYSHETSKIY, Y.** Efficient representation learning using random walks for dynamic graphs. *arXiv preprint arXiv:1901.01346*, 2019

- **SANKAR, A.** ; **WU, Y.** ; **GOU, L.** ; **ZHANG, W.** ; **YANG, H.** Dysat: Deep neural representation learning on dynamic graphs via self-attention networks. *Proceedings of the 13th international conference on web search and data mining*, 2020, 519-527

- **SARKAR, P.** ; **MOORE, A.W.** Fast nearest-neighbor search in disk-resident graphs. *Proceedings of the 16th ACM SIGKDD international conference on Knowledge discovery and data mining*, 2010, 513-522

- **SUTTON, R.S.** Temporal credit assignment in reinforcement learning. *University of Massachusetts Amherst*, 1984

- **TANG, J.** ; **QU, M.** ; **WANG, M.** ; **ZHANG, M.** ; **YAN, J.** ; **MEI, Q.** Line: Large-scale information network embedding. *Proceedings of the 24th international conference on world wide web*, 2015, 1067-1077

- Fast random walk with restart and its applications. **TONG, H.** ; **FALOUTSOS, C.** ; **PAN, J.Y.** Sixth international conference on data mining (ICDM'06). IEEE, 2006, 613-622

- **VASWANI, A.** ; **SHAZEER, N.** ; **PARMAR, N.** ; **USZKOREIT, J.** ; **JONES, L.** ; **GOMEZ, A.N.** ; **KAISER, L.** ; **POLOSUKHIN, I.** Attention is all you need. *Advances in neural information processing systems*, 2017, vol. 30

- **WANG, L.** ; **HUANG, C.** ; **MA, W.** ; **LIU, R.** ; **VOSOUGHI, S.** Hyperbolic node embedding for temporal networks. *Data Mining and Knowledge Discovery*, 2021, vol. 35 (5), 1906-1940

- **WANG, X.** ; **LYU, D.** ; **LI, M.** ; **XIA, Y.** ; **YANG, Q.** ; **WANG, X.** ; **WANG, X.**, **CUI, P.** ; **YANG, Y.** ; **SUN, B.** et al. Apan: Asynchronous propagation attention network for real-time temporal graph embedding. *Proceedings of the 2021 international conference on management of data*, 2021, 2628-2638

- **WANG, Y.** ; **CHANG, Y.Y.** ; **LIU, Y.** ; **LESKOVEC, J.** ; **LI, P.** Inductive representation learning in temporal networks via causal anonymous walks. *arXiv preprint arXiv:2101.05974*, 2021

- **WILLIAMS, R.J.** ; **PENG, J.** An efficient gradient-based algorithm for on-line training of recurrent network trajectories. *Neural computation*, 1990, vol. 2 (4), 490-501

- **WILLIAMS, R.J.** ; **ZIPSER, D.** A learning algorithm for continually running fully recurrent neural networks. *Neural computation*, 1989, vol. 1 (2), 270-280

- **WU, W.** ; **LI, B.** ; **LUO, C.** ; **NEJDL, W.** Hashing-accelerated graph neural networks for link prediction. *Proceedings of the Web Conference 2021*, 2021, 2910-2920

- **XIA, F.** ; **LIU, J.** ; **NIE, H.** ; **FU, Y.** ; **WAN, L.** ; **KONG, X.** Random walks: A review of algorithms and applications. *IEEE Transactions on Emerging Topics in Computational Intelligence*, 2019, vol. 4 (2), 95-107

- **XU, D.** ; **RUAN, C.** ; **KORPEOGLU, E.** ; **KUMAR, S.** ; **ACHAN, K.** Inductive representation learning on temporal graphs. *arXiv preprint arXiv:2002.07962*, 2020

- **YANG, C.** ; **PAL, A.** ; **ZHAI, A.** ; **PANCHA, N.** ; **HAN, J.** ; **ROSENBERG, C.** ; **LESKOVEC, J.** Multisage: Empowering gcn with contextualized multi-embeddings on web-scale multipartite networks. *Proceedings of the 26th ACM SIGKDD International Conference on Knowledge Discovery & Data Mining.*, 2020, 2434-2443

- **YANG, D.** ; **QU, B.** ; **YANG, J.** ; **WANG, L.** ; **CUDRE-MAUROUX, P.** Streaming graph embeddings via incremental neighborhood sketching. *IEEE Transactions on Knowledge and Data Engineering*, 2022, vol. 35 (5), 5296-5310

- **YING, R.** ; **HE, R.** ; **CHEN, K.** ; **EKSOMBATCHAI, P.** ; **HAMILTON, W.L.** ; **LESKOVEC, J.** Graph convolutional neural networks for web-scale recommender systems. *Proceedings of the 24th ACM SIGKDD International Conference on Knowledge Discovery & Data Mining*, 2018, 974-983

- **ZHANG, Z.** ; **CUI, P.** ; **ZHU, W.** Deep learning on graphs: A survey. *IEEE Transactions on Knowledge and Data Engineering*, 2020, vol. 34 (1), 249-270

- **ZHOU, J.** ; **CUI, G.** ; **HU, S.** ; **ZHANG, Z.** ; **YANG, C.** ; **LIU, Z.** ; **WANG, L.** ; **LI, C.** ; **SUN, M.** Graph neural networks: A review of methods and applications. *AI open*, 2020, vol. 1, 57-81

- **ZHU, Q.** ; **WEI, H.** ; **SISMAN, B.** ; **ZHENG, D.** ; **FALOUTSOS, C.** ; **DONG, X.L.** ; **HAN, J.** Collective multi-type entity alignment between knowledge graphs. *Proceedings of The Web Conference 2020*, 2020, 2241-2252